# EUROPEAN PATENT APPLICATION

(11) **EP 4 644 444 A1**
(43) Date of publication of application: **05.11.2025**
(21) Application number: 23911994.4
(22) Date of filing: 22.12.2023
(51) Int. Cl.: C08F 290/06, B29C 39/02, C08F 299/00, G02C 7/04

(54) **CURABLE COMPOSITION, MOLDED BODY, SILICONE HYDROGEL, AND METHOD FOR PRODUCING SILICONE HYDROGEL**

(30) Priority: 27.12.2022 JP 2022209974
(71) Applicant: Mitsubishi Chemical Corporation, Tokyo 100-8251 (JP)
(72) Inventor: TSURUOKA Taiki, Tokyo 100-8251 (JP); MISHIMA Shiori, Tokyo 100-8251 (JP); TABATA Daiki, Tokyo 100-8251 (JP); FUKUTA Hiroki, Tokyo 100-8251 (JP); OTANI Go, Tokyo 100-8251 (JP)
(74) Representative: Hoffmann Eitle
(86) International application number: PCT/JP2023/046207
(87) International publication number: WO 2024/143214

(57) **Abstract**

A curable composition capable of forming a molded body and a silicone hydrogel, which have excellent surface hydrophilicity and transparency even when using a hydrophobic mold of polypropylene or the like; a molded body and a silicone hydrogel containing the curable composition; and a method for producing the silicone hydrogel are provided. The curable composition of the present invention contains a macromonomer (A) comprising a structural unit (a1) represented by Formula (1), a silicone-based (meth)acrylate (B), a hydrophilic monomer (C), and a surfactant (D). 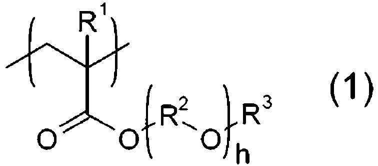 R¹: a hydrogen atom or a methyl group, R²: an alkylene group having 1 to 4 carbon atoms, R³: a hydrocarbon group having 1 to 6 carbon atoms, h: a natural number of 1 to 20

## Description

### BACKGROUND OF THE INVENTION

### Field of the Invention

The present invention relates to a curable composition, a molded body, a silicone hydrogel, and a method for producing the silicone hydrogel.

Priority is claimed on Japanese Patent Application No. 2022-209974, filed December 27, 2022, the content of which is incorporated herein by reference.

### Description of Related Art

A silicone hydrogel has been used as a material for a contact lens, an intraocular lens, and the like due to having high oxygen permeability.

In general, a soft contact lens is produced by a cast molding method. A polypropylene mold is often used in this method, but, since polypropylene is hydrophobic, a silicone monomer polymerizes in a segregated state on the mold surface, whereby hydrophilicity of a lens surface tends to be reduced.

When the lens surface is not sufficiently hydrophilic, there is a concern that lipids and proteins are easily attached thereto, leading to clouding of the lens and eye diseases. In addition, since a tear film is likely to break, there is a concern that discomfort such as dryness and friction of the eye or a disease such as blepharitis occurs.

As a technique for improving surface hydrophilicity of the contact lens using such a silicone hydrogel, Patent Document 1 proposes a method of generating plasma after vaporizing a hydrophilic monomer to form a hydrophilic polymer film on the lens surface.

Patent Document 2 proposes a method in which a contact lens after molding is impregnated with a storage solution containing a surfactant and a hydrophilic polymer, and the surfactant is attached to the surface of the contact lens.

Patent Document 3 proposes a method of improving hydrophilicity by adding a polymerizable amphiphilic substance and curing the substance to expose a hydrophilic group on the surface.

Patent Document 4 proposes a method of forming a stable hydrophilic surface on the contact lens by using a monomer having a specific structure which strongly interacts with some surfactants.

### Citation List

### Patent Document

Patent Document 1: Japanese Unexamined Patent Application, First Publication No. S58-216222
Patent Document 2: Japanese Unexamined Patent Application, First Publication No. S61-69023
Patent Document 3: Published Japanese Translation No. H6-503373 of the PCT International Publication
Patent Document 4: Japanese Unexamined Patent Application, First Publication No. 2014-40598

### SUMMARY OF THE INVENTION

However, the plasma treatment proposed in Patent Document 1 requires a very large-scale device. In addition, conditions for forming the coating film are complicated.

In the method proposed in Patent Document 2, wettability and surface lubricity of the contact lens cannot be sustained for a long period of time.

In the method proposed in Patent Document 3, the amphiphilic substance is copolymerized with other raw materials of the contact lens. This affects the moisture content and mechanical properties of the contact lenses. As a result, physical properties suitable for the contact lens cannot be maintained.

In the method proposed in Patent Document 4, the surfactant is released due to long-term storage, friction during wearing on the eye, or tear replacement, and thus the surface hydrophilicity of the contact lens is reduced.

The present invention includes an object of proposing a curable composition capable of forming a molded body and a silicone hydrogel, which have excellent surface hydrophilicity and transparency even when using a hydrophobic mold of polypropylene or the like.

As a result of intensive research to solve the problems described above, the present inventors found that the problems described above can be solved by using a macromonomer (A) comprising a specific structural unit and a surfactant.

The present invention includes the following aspects.
[1] A curable composition comprising:
   a macromonomer (A) comprising a structural unit (a1) represented by Formula (1);
   a silicone-based (meth)acrylate (B);
   a hydrophilic monomer (C); and
   a surfactant (D), 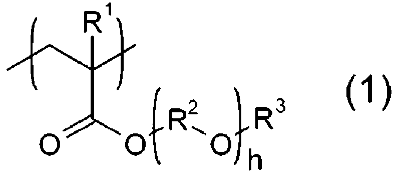
   in Formula (1), R¹ represents a hydrogen atom or a methyl group, R² represents an alkylene group having 1 to 4 carbon atoms, R³ represents a hydrocarbon group having 1 to 6 carbon atoms, and h is a natural number of 1 to 20.
[2] The curable composition according to [1],
   wherein a contained amount of the macromonomer (A) is 1% to 50% by mass.
[3] The curable composition according to [1] or [2],
   wherein a proportion of the structural unit (a1) in all structural units of the macromonomer (A) is 40% by mass or more.
[4] The curable composition according to any one of [1] to [3],
   wherein a proportion of the structural unit (a1) in all structural units of the macromonomer (A) is 70% by mass or more.
[5] The curable composition according to any one of [1] to [4],
   wherein a number-average molecular weight of the macromonomer (A) is 500 to 100,000.
[6] The curable composition according to any one of [1] to [5],
   wherein a number-average molecular weight of the macromonomer (A) is 1,000 to 5,000.
[7] The curable composition according to any one of [1] to [6],
   wherein the structural unit (a1) is derived from a monomer (a'1), and
   the monomer (a'1) is at least one selected from the group consisting of methoxymethyl acrylate, methoxyethyl acrylate, methoxypropyl acrylate, methoxybutyl acrylate, methoxypolyethylene glycol acrylate, methoxymethyl methacrylate, methoxyethyl methacrylate, methoxypropyl methacrylate, methoxybutyl methacrylate, and methoxypolyethylene glycol methacrylate.
[8] The curable composition according to any one of [1] to [7],
   wherein the macromonomer (A) comprises a terminal structure (a2) represented by Formula (2), 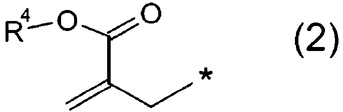
   in Formula (2), R⁴ represents a hydrogen atom, or an alkyl group, an alkoxy group, an alkoxyalkyl group, an alicyclic group, an aryl group, a heteroaryl group, or a non-aromatic heterocyclic group, each of which may have a substituent, and * represents a bonding site.
[9] The curable composition according to any one of [1] to [8],
   wherein the silicone-based (meth)acrylate (B) is a monomer comprising a siloxanyl group in a molecule.
[10] The curable composition according to any one of [1] to [9],
   wherein the hydrophilic monomer (C) is a monomer comprising, in a molecule, one or more groups selected from a hydroxyl group, an amino group, a carboxyl group, an ionic group, an amide structure, and an alkylene oxide structure.
[11] The curable composition according to any one of [1] to [10],
   wherein the surfactant (D) has an HLB value of 3 to 19.
[12] The curable composition according to any one of [1] to [11],
   wherein the surfactant (D) is a surfactant comprising a polyoxyethylene group or a sugar-based surfactant.
[13] The curable composition according to any one of [1] to [12],
   wherein the surfactant (D) is a non-polymerizable surfactant.
[14] The curable composition according to any one of [1] to [13],
   wherein a moisture content of the curable composition is 0% by mass or more and 10% by mass or less.
[15] A molded body comprising:
   the curable composition according to any one of [1] to [14].
[16] A silicone hydrogel comprising:
   the curable composition according to any one of [1] to [14].
[17] A method for producing a silicone hydrogel, the method comprising:
   a step of preparing the curable composition according to any one of [1] to [14];
   a step of filling a mold with the curable composition and performing a polymerization reaction to obtain a molded body; and
   a step of hydrating the molded body to obtain a hydrogel.
[18] The method for producing a silicone hydrogel according to [17],
   wherein the mold has a hydrophobic surface.

With the curable composition according to the aspect of the present invention, it is possible to form a molded body and a silicone hydrogel, which have exceptional surface hydrophilicity and transparency even when using a hydrophobic mold of polypropylene or the like.

### DETAILED DESCRIPTION OF THE INVENTION

### "(Meth)acrylate" is a generic term for acrylate and methacrylate.

"Non-polymerizable" means that monomer components such as the silicone-based (meth)acrylate (A) and the hydrophilic monomer (B) in the curable composition do not chemically bond to each other and do not become immobilized in a cured product in a polymerization reaction during curing.
"to" indicating a numerical range means that the numerical values described before and after "to" are included as the lower limit value and the upper limit value.

The numerical value range described in the present specification can be any numerical value range of any combination of the lower limit value and the upper limit value thereof.

Hereinafter, embodiments of the present invention will be described. The following embodiments are merely examples for explaining the present invention, and the present invention is not intended to be limited only to these embodiments. The present invention can be carried out in various aspects as long as the various aspects maintain the gist of the invention.

### <Curable composition>

The curable composition according to the embodiment of the present invention contains at least a macromonomer (A) comprising a specific structural unit (hereinafter, also simply referred to as "macromonomer (A)"), a silicone-based (meth)acrylate (B), a hydrophilic monomer (C), and a surfactant (D).

Hereinafter, embodiments of each component will be described.

### 1. Macromonomer (A)

The term "macromonomer" in the present invention is a high-molecular-weight monomer comprising a terminal polymerizable functional group and a high-molecular-weight skeleton component.

A number-average molecular weight (Mn) of the macromonomer (A) is preferably 500 to 100,000, more preferably 700 to 20,000, still more preferably 1,000 to 5,000, and particularly preferably 2,000 to 4,000.

When the number-average molecular weight of the macromonomer (A) is less than or equal to the above-described upper limit value, the macromonomer (A) is concentrated on a surface of a molded body and a hydrogel and thus is likely to be segregated. Therefore, a large phase separation structure on the order of submicrons to microns is less likely to occur inside the molded body and the hydrogel. As a result, it is considered that transparency is less likely to be impaired. In addition, when the number-average molecular weight is greater than or equal to the above-described lower limit value, a difference in molecular weight and reactivity with the hydrophilic monomer (C) is likely to occur. The macromonomer (A) is concentrated and segregated on the surface of the molded body and the hydrogel while inducing reaction phase separation. Therefore, it is considered that hydrophilicity of the surface of the molded body and the hydrogel can be increased.

The number-average molecular weight of the macromonomer (A) is calculated by gel permeation chromatography (GPC) as a relative molecular weight, using polymethyl methacrylate as a reference resin.

A contained amount of the macromonomer (A) in the curable composition according to the embodiment of the present invention is preferably 1 to 50% by mass and more preferably 5 to 40% by mass. When the contained amount of the macromonomer (A) is within the above-described range, the surface hydrophilicity and the transparency of the molded body and the hydrogel are favorable.

The macromonomer (A) according to the present invention comprises a structural unit (a1) represented by Formula (1).

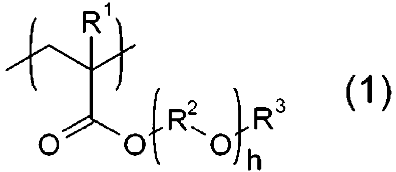

In Formula (1), R¹ represents a hydrogen atom or a methyl group, R² represents an alkylene group having 1 to 4 carbon atoms, R³ represents a hydrocarbon group having 1 to 6 carbon atoms, and h is a natural number of 1 to 20.

Examples of the alkylene group of R² include a branched or linear alkylene group having 1 to 4 carbon atoms. More specific examples thereof include a methylene group, an ethylene group, an n-propylene group, an i-propylene group, an n-butylene group, a t-butylene group, and an i-butylene group.

Among the above, from the viewpoint of surface hydrophilicity and transparency of the molded body and the hydrogel, R² is preferably a methylene group, an ethylene group, an n-propylene group, or an n-butylene group, and more preferably a methylene group or an ethylene group.

Examples of the hydrocarbon group of R³ include a branched or linear alkyl group having 1 to 6 carbon atoms. More specific examples thereof include a methyl group, an ethyl group, an n-propyl group, an i-propyl group, an n-butyl group, a t-butyl group, an i-butyl group, a pentyl group (amyl group), an i-pentyl group, and a hexyl group.

Among the above, from the viewpoint of surface hydrophilicity and transparency of the molded body and the hydrogel, R³ is preferably a methyl group, an ethyl group, an n-propyl group, an i-propyl group, an n-butyl group, a t-butyl group or an i-butyl group; more preferably a methyl group, an ethyl group, an n-propyl group, or an n-butyl group; and still more preferably a methyl group or an ethyl group.

From the viewpoint of ease of availability, R¹ is preferably a hydrogen atom.

h is a natural number of 1 to 20, preferably 1 to 10, more preferably 1 to 8, and still more preferably 1 to 5. When h is within the above-described range, crystallinity does not easily become high, resulting in favorable handling properties.

A contained amount of the structural unit (a1) in all structural units of the macromonomer (A) is preferably 40% by mass or more and 100% by mass or less, more preferably 70% by mass or more and 100% by mass or less, and still more preferably 90% by mass or more and 99% by mass or less. When the contained amount of the structural unit (a1) is within the above-described range, it is possible to impart the effect of suppressing protein attachment to the molded body and the hydrogel.

The reason why the fact that the curable composition contains the macromonomer (A) comprising the structural unit (a1) enables the molded body and the hydrogel to suppress protein attachment is considered to be as follows.

As water for carrying out hydration on a surface of a polymer, free water that interacts weakly with the polymer, intermediate water that interacts moderately with the polymer, and non-freezing water that interacts strongly with the polymer have been known. When the intermediate water is present on the surface of the polymer, protein is less likely to adhere to the surface of the polymer. As a result, it is considered that protein adhesion inhibiting ability is imparted. It is considered that the structural unit (a1) is effective in allowing the intermediate water to be present on the surface of the polymer. In particular, it is considered that a structural unit based on methoxyethyl acrylate or methoxyethyl methacrylate is effective.

A degree of polymerization of the structural unit (a1) is preferably a natural number of 1 to 1,000,000, and from the viewpoint of suppressing the protein attachment, a natural number of 2 to 100,000 is more preferable and a natural number of 5 to 50,000 is still more preferable. When the above-described degree of polymerization is 1 or more, the effect of suppressing protein attachment is exceptional. In addition, when the above-described degree of polymerization is 1,000,000 or less, moldability is exceptional.

A terminal structure of the macromonomer (A) is not particularly limited as long as it comprises a polymerizable functional group. Examples thereof include a vinyl group, a (meth)acryloyl group, a 2-(hydroxymethyl)acryloyl group, a terminal structure (a2) represented by Formula (2), and a terminal structure (a3) represented by Formula (3).

Among the above, a terminal structure (a2) represented by formula (2) is preferable.

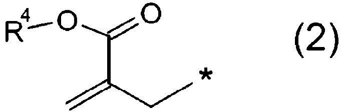

In Formula (2), R⁴ represents a hydrogen atom, or an alkyl group, an alkoxy group, an alkoxyalkyl group, an alicyclic group, an aryl group, a heteroaryl group, or a non-aromatic heterocyclic group, each of which may have a substituent, and * represents a bonding site.

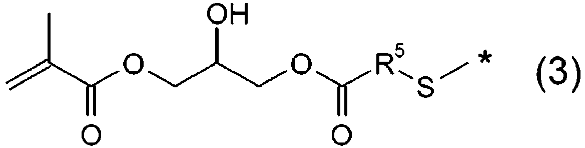

In formula (3), R⁵ represents an alkylene group having 1 to 18 carbon atoms, and * represents a bonding site.

In Formula (2), examples of the alkyl group of R⁴ include a branched or linear alkyl group having 1 to 22 carbon atoms. More specific examples thereof include a methyl group, an ethyl group, an n-propyl group, an i-propyl group, an n-butyl group, a t-butyl group, an i-butyl group, a pentyl group (amyl group), an i-pentyl group, a hexyl group, a heptyl group, a 2-ethylhexyl group, an octyl group, an i-octyl group, a nonyl group, an i-nonyl group, a decyl group, an i-decyl group, an undecyl group, a dodecyl group (lauryl group), a tridecyl group, a tetradecyl group, a pentadecyl group, a hexadecyl group, a heptadecyl group, an octadecyl group (stearyl group), an i-octadecyl group, a nonadecyl group, an icosyl group, and a docosyl group.

Examples of the alkoxy group of R⁴ include a branched or linear alkoxy group having 1 to 22 carbon atoms. More specific examples thereof include a methoxy group, an ethoxy group, a propoxy group, and a butoxy group.

Examples of the alkoxyalkyl group of R⁴ include a branched or linear alkoxyalkyl group having 1 to 22 carbon atoms. More specific examples thereof include a methoxymethyl group, a methoxyethyl group, a methoxypropyl group, a methoxybutyl group, an ethoxymethyl group, an ethoxyethyl group, an ethoxypropyl group, an ethoxybutyl group, a propoxymethyl group, a propoxyethyl group, a propoxypropyl groups, a propoxybutyl group, a butoxymethyl group, a butoxyethyl group, a butoxypropyl group, and a butoxybutyl group.

Examples of the aryl group of R⁴ include an aryl group having 6 to 18 carbon atoms. More specific examples thereof include a phenyl group and a naphthyl group.

Examples of the heteroaryl group of R⁴ include a heteroaryl group having 4 to 18 carbon atoms. More specific examples thereof include a pyridyl group and a carbazolyl group.

Examples of the non-aromatic heterocyclic group of R⁴ include a non-aromatic heterocyclic group having 4 to 18 carbon atoms. More specific examples thereof include oxygen atom-containing heterocyclic groups such as a tetrahydrofuryl group and a tetrahydropyranyl group; and nitrogen atom-containing heterocyclic groups such as a γ-butyrolactone group, an ε-caprolactone group, a pyrrolidinyl group, a pyrrolidone group, and a morpholino group.

Among the above, from the viewpoint of surface hydrophilicity and transparency of the molded body and the hydrogel, R⁴ is preferably an unsubstituted or substituted alkyl group; more preferably a methyl group, an ethyl group, an n-propyl group, an i-propyl group, an n-butyl group, a t-butyl group, or an i-butyl group; and particularly preferably an ethyl group.

In Formula (3), examples of the alkylene group of R⁵ include a branched or linear alkylene group having 1 to 18 carbon atoms. More specific examples thereof include a methylene group, an ethylene group, an n-propylene group, an i-propylene group, an n-butylene group, a t-butylene group, an i-butylene group, a pentylene group, an i-pentylene group, a hexylene group, a heptylene group, a 2-ethylhexylene group, an octylene group, an i-octylene group, a nonylene group, an i-nonylene group, a decylene group, an i-decylene group, an undecylene group, a dodecylene group, a tridecylene group, a tetradecylene group, a pentadecylene group, a hexadecylene group, a heptadecylene group, an octadecylene group, and an i-octadecylene group.

Among the above, from the viewpoint of surface hydrophilicity and transparency of the molded body and the hydrogel, R⁵ is preferably a methylene group, an ethylene group, an n-propylene group, an i-propylene group, an n-butylene group, a t-butylene group, or an i-butylene group, and more preferably a methylene group or an ethylene group.

### [Method for producing macromonomer (A)]

The macromonomer (A) can be produced by a known method. Examples of a method for producing the macromonomer (A) include the following production methods (A1) and (A2):
production method (A1): a method of producing the macromonomer (A) using a (meth)acrylic acid-based monomer (a), a compound (b) described later, and a radical polymerization initiator (c).
production method (A2): a method of chemically bonding a polymerizable group (Japanese Unexamined Patent Application, First Publication No. S60-133007, United States Patent No. 5147952, and Japanese Unexamined Patent Application, First Publication No. H06-298921).

### =Production method (A1)=

The (meth)acrylic acid-based monomer (a) in the production method (A1) may be any monomer and is not particularly limited. For example, a monomer (a'1) mentioned below is preferable. That is, the above-described structural unit (a1) represented by Formula (1) is preferably derived from the monomer (a'1).

Examples of the monomer (a'1) include methoxymethyl acrylate, methoxyethyl acrylate, methoxypropyl acrylate, methoxybutyl acrylate, ethoxymethyl acrylate, ethoxyethyl acrylate, ethoxypropyl acrylate, ethoxybutyl acrylate, propoxymethyl acrylate, propoxyethyl acrylate, propoxypropyl acrylate, propoxybutyl acrylate, butoxymethyl acrylate, butoxyethyl acrylate, butoxypropyl acrylate, butoxybutyl acrylate, methoxymethyl methacrylate, methoxyethyl methacrylate, methoxypropyl methacrylate, methoxybutyl methacrylate, ethoxymethyl methacrylate, ethoxyethyl methacrylate, ethoxypropyl methacrylate, ethoxybutyl methacrylate, propoxymethyl methacrylate, propoxyethyl methacrylate, propoxypropyl methacrylate, propoxybutyl methacrylate, butoxymethyl methacrylate, butoxyethyl methacrylate, butoxypropyl methacrylate, butoxybutyl methacrylate, "Blemmer PME-100" (product name; methoxypolyethylene glycol methacrylate (with 2 chains of ethylene glycol) manufactured by NOF Corp.), and "Blemmer PME-200" (product name; methoxypolyethylene glycol methacrylate (with 4 chains of ethylene glycol) manufactured by NOF Corp.).

The monomer (a'1) may be used alone or in combination of two or more kinds thereof.

Among the above, from the viewpoint of suppressing the protein attachment, the monomer (a'1) is more preferably methoxymethyl acrylate, methoxyethyl acrylate, methoxypropyl acrylate, methoxybutyl acrylate, methoxy polyethylene glycol acrylate, methoxymethyl methacrylate, methoxyethyl methacrylate, methoxypropyl methacrylate, methoxybutyl methacrylate, methoxypolyethylene glycol methacrylate are preferable, methoxyethyl acrylate, methoxypropyl acrylate, methoxypolyethylene glycol acrylate, or methoxypolyethylene glycol methacrylate; and still more preferably methoxyethyl acrylate or methoxyethyl methacrylate.

The compound (b) is a compound that plays a role of chain transfer. For example, the compound (b) is preferably a compound represented by Formula (6).

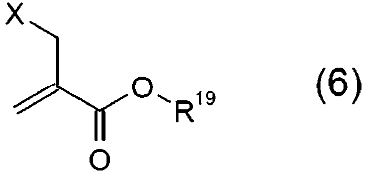

In formula (6), X represents any atom of chlorine, bromine, or iodine. R¹⁹ represents a hydrogen atom, or an alkyl group, an alkoxy group, an alkoxyalkyl group, an alicyclic group, an aryl group, a heteroaryl group, or a non-aromatic heterocyclic group, each of which may have a substituent, where the description for R⁴ in Formula (2) above is adopted.

The compound (b) may be used alone or in combination of two or more kinds thereof. The compound (b) can be obtained, for example, the following method.

A (meth)acrylic acid-based monomer is reacted with formaldehyde or paraformaldehyde in the presence of diazabicycloundecene or 1,4-diazabicyclo[2.2.2]octane, either as it is or in an organic solvent, to synthesize a compound in which X in formula (6) is a hydroxyl group. Next, the compound (b) is obtained by a reaction with a halogen-containing compound such as hydrogen halide and phosphorus trihalide to halogenate the hydroxyl group.

The (meth)acrylic acid-based monomer used in the preparation of the compound (b) may be any monomer and is not particularly limited.

Examples of the radical polymerization initiator (c) include an organic peroxide and an azo compound.

Examples of the organic peroxide include 2,4-dichlorobenzoyl peroxide, t-butyl peroxypivalate, o-methylbenzoyl peroxide, bis-3,5,5-trimethylhexanoyl peroxide, octanoyl peroxide, t-butyl peroxy-2-ethylhexanoate, cyclohexanone peroxide, benzoyl peroxide, methyl ethyl ketone peroxide, dicumyl peroxide, lauroyl peroxide, diisopropylbenzene hydroperoxide, t-butyl hydroperoxide, and di-t-butyl peroxide.

Examples of the azo compound include 2,2'-azobisisobutyronitrile, 2,2'-azobis(2-methylbutyronitrile), 2,2'-azobis(2,4-dimethylvaleronitrile), 2,2'-azobis(2,4-dimethyl-4-methoxyvaleronitrile), and dimethyl 2,2'-azobis(2-methylpropionate).

The radical polymerization initiator (c) may be used alone or in combination of two or more kinds thereof.

Among the above, from the viewpoint of ease of availability, benzoyl peroxide, 2,2'-azobisisobutyronitrile, 2,2'-azobis(2-methylbutyronitrile), 2,2'-azobis(2,4-dimethylvaleronitrile), 2,2'-azobis(2,4-dimethyl-4-methoxyvaleronitrile), or dimethyl 2,2'-azobis(2-methylpropionate) is preferable.

In terms of controlling heat generation during the polymerization, an addition amount of the radical polymerization initiator (c) is preferably 0.001 to 1 mol% and more preferably 0.01 to 0.5 mol% with respect to 100 parts by mass of the (meth)acrylic acid-based monomer.

From the viewpoint of solubility and reaction stability of each component, a polymerization temperature is preferably 0°C or higher and equal to or lower than a temperature obtained by subtracting 15°C from a 10-hour half-life temperature of the radical polymerization initiator (c).

A polymerization time is not particularly limited, but for example, it is 3 to 12 hours, preferably 5 to 8 hours.

In addition, in the solution polymerization, the organic solvent, the (meth)acrylic acid-based monomer (a), the compound (b), and the radical polymerization initiator (c) may be collectively added and polymerized, or the monomer may be added dropwise to proceed with the polymerization.

### =Production method (A2)=

Examples of the method of chemically bonding a polymerizable group include a production method in which, after polymerization using the (meth)acrylic acid-based monomer (a), a chain transfer agent (d), and the radical polymerization initiator (c), a reaction is carried out between a site derived from the chain transfer agent (d) introduced at the α-terminal and a reactive monomer (e).

For example, the chain transfer agent (d) is preferably a compound represented by Formula (7).

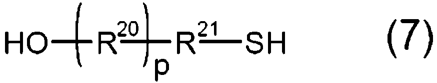

In Formula (7), R²⁰ represents a carbonyl group, and R²¹ represents an alkylene group having 1 to 18 carbon atoms, where the description for R⁵ in Formula (3) above is adopted. p is 0 or 1.

Examples of the chain transfer agent (d) in which R²⁰ in Formula (7) is a carbonyl group include 3-mercaptopropionic acid, 6-mercaptohexanoic acid, 11-mercaptoundecanoic acid, and 16-mercaptohexadecanoic acid. Among the above, in terms of ease of availability, 3-mercaptopropionic acid is preferable.

When R²⁰ in formula (7) is a carbonyl group and p is 1, the chain transfer agent (d) comprises a carboxy group. Therefore, the reactive monomer (e) combined with the chain transfer agent (d) at this time preferably comprises a reactive group which is reactive with the carboxy group, such as a glycidyl group.

Examples of the monomer (e) comprising a glycidyl group include glycidyl (meth)acrylate, 3,4-epoxycyclohexylmethyl methacrylate, and 4-hydroxybutyl acrylate glycidyl ether. Among the above, in terms of ease of availability, glycidyl methacrylate is preferable.

In addition, examples of the chain transfer agent (d) in which p in Formula (7) is 0 include mercaptoethanol, 3-mercapto-1-propanol, 1-mercapto-2-propanol, 2-mercapto-1-propanol, 3-mercapto-2-butanol, 4-mercapto-1-butanol, 6-mercapto-1-hexanol, 3-mercaptohexanol, 3-mercapto-3-methyl-1-butanol, and 4-hydroxybenzenethiol. Among the above, in terms of ease of availability, mercaptoethanol is preferable.

When p in Formula (7) is 0, the chain transfer agent (d) comprises a hydroxyl group. Therefore, the reactive monomer (e) combined with the chain transfer agent (d) at this time preferably comprises a reactive group which is reactive with the hydroxyl group, such as an isocyanate group. Examples of the monomer (e) comprising an isocyanate group include 2-isocyanatoethyl (meth)acrylate.

The chain transfer agent (d) may be used alone or in combination of two or more kinds thereof.

### 2. Silicone-based (meth)acrylate (B)

The silicone-based (meth)acrylate (B) according to the present invention is a component which contributes to oxygen permeability, transparency, mechanical strength, hydrophilicity, and the like of the molded body and the hydrogel.

The silicone-based (meth)acrylate (B) may be any of a monomer, a macromonomer, or a prepolymer.

The silicone-based (meth)acrylate (B) preferably comprises a siloxanyl group in a molecule.

Examples of the silicone-based (meth)acrylate (B) include trimethylsiloxydimethylsilylmethyl (meth)acrylate, trimethylsiloxydimethylsilylpropyl (meth)acrylate, methylbis(trimethylsiloxy)silylpropyl (meth)acrylate, tris(trimethylsiloxy)silylpropyl (meth)acrylate, mono[methylbis(trimethylsiloxy)siloxy]bis(trimethylsiloxy)silylpropyl (meth)acrylate, tris[methylbis(trimethylsiloxy)siloxy]silylpropyl (meth)acrylate, methylbis(trimethylsiloxy)silylpropylglyceryl (meth)acrylate, tris(trimethylsiloxy)silylpropylglyceryl (meth)acrylate, mono[methylbis(trimethylsiloxy)siloxy]bis(trimethylsiloxy)silylpropylglyceryl (meth)acrylate, trimethylsilylethyltetramethyldisiloxypropyl glyceryl (meth)acrylate, trimethylsiloxydimethylsilylpropylglyceryl (meth)acrylate, methylbis(trimethylsiloxy)silylethyltetramethyldisiloxymethyl (meth)acrylate, tetramethyltriisopropylcyclotetrasiloxanylpropyl (meth)acrylate, and tetramethyltriisopropylcyclotetrasiloxybis(trimethylsiloxy)silylpropyl (meth)acrylate.

Examples of the silicone-based (meth)acrylate (B) include a compound (B1) and a compound (B2) described below.

### [Compound (B1)]

The compound (B1) is a silicone-based (meth)acrylate represented by Formula (4).

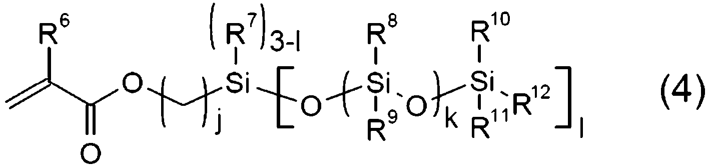

In Formula (4), R⁶ represents a hydrogen atom or a methyl group. R⁷ to R¹² each independently represent an alkyl group, an alkoxy group, or an alkoxyalkyl group, which may have a substituent. j represents a natural number of 1 to 10. k represents a natural number of 1 to 30. 1 represents a natural number of 1 to 3. When 1 is 1, a plurality of R⁷'s may be the same or different from each other, and when 1 is 2 or more, a plurality of R⁸'s to R¹²'s may be the same or different from each other. In addition, when k is 2 or more, a plurality of R⁸'s and R⁹'s may be the same or different from each other.

From the viewpoint of ease of availability, R⁶ is preferably a methyl group.

The alkyl group, the alkoxy group, and the alkoxyalkyl group for R⁷ to R¹² are the same as those described for R⁴ in Formula (2) above.

In addition, R⁷ to R¹² may be a halogenated alkyl group, and examples of the halogen include fluorine, chlorine, bromine, and iodine.

Among these, R⁷ is preferably an unsubstituted or substituted alkyl group; more preferably a methyl group, an ethyl group, an n-propyl group, an i-propyl group, an n-butyl group, a t-butyl group, or an i-butyl group; and still more preferably a methyl group.

In addition, R⁸ to R¹² are preferably an alkyl group or a halogenated alkyl group; and more preferably a methyl group, an ethyl group, an n-propyl group, an i-propyl group, an n-butyl group, a t-butyl group, an i-butyl group, a fluoromethyl group, a difluoromethyl group, a trifluoromethyl group, a 1-fluoroethyl group, a 2-fluoroethyl group, a 1,1-difluoroethyl group, a 1,2-difluoroethyl group, a 2,2-difluoroethyl group, a 2,2,2-trifluoroethyl group, a 3,3,3-trifluoropropyl group, or a 1-trifluoromethylethyl group.

From the viewpoint of oxygen permeability of the molded body and hydrogel, it is preferable that at least one of R⁸ to R¹² is an alkyl halide group, and it is more preferable that at least one of R⁸ to R¹² is a fluorinated alkyl group.

j is a natural number of 1 to 10, preferably 1 to 5.

k is a natural number of 1 to 30, preferably 1 to 20. The compound (B1) may be a mixture of a plurality of compounds having different k.

1 is a natural number of 1 to 3, preferably 1 or 2.

Among the above, at least one of the following compounds is preferable as the compound (B1).
· A compound in which, in Formula (4), R⁶ to R¹¹ are methyl groups, R¹² is an n-butyl group, j is 3, and 1 is 1 ("Silaplane (registered trademark) FM-0711", "Silaplane (registered trademark) FM-0721", and "Silaplane (registered trademark) FM-0725" manufactured by JNC Corporation; and "MCR-M07" and "MCR-M11" manufactured by Gelest Inc.)
· A compound in which, in Formula (4), R⁶, R⁷, R⁹, and R¹¹ are methyl groups, R⁸ and R¹⁰ are 3,3,3-trifluoropropyl groups, R¹² is an n-butyl group, j is 3, and 1 is 1 ("MFR-M15" manufactured by Gelest Inc.)
· A compound in which, in Formula (4), R⁶ to R¹¹ are methyl groups, R¹² is an n-butyl group, j is 3, and 1 is 2 ("MCS-M11" manufactured by Gelest, Inc.)
· A compound in which, in Formula (4), R⁶ to R¹¹ are methyl groups, R¹² is a methoxypropyl group, j is 3, and 1 is 2 ("MCS-MX11" manufactured by Gelest, Inc.)
· A compound in which, in Formula (4), R⁶, R⁷, R⁹, and R¹¹ are methyl groups, R⁸ and R¹⁰ are 3,3,3-trifluoropropyl groups, R¹² is an n-butyl group, j is 3, and 1 is 2 ("MFS-M15" manufactured by Gelest, Inc.)

### [Compound (B2)]

The compound (B2) is a silicone-based (meth)acrylate represented by Formula (5).

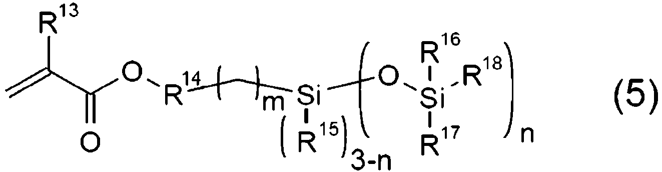

In Formula (5), R¹³ represents a hydrogen atom or a methyl group. R¹⁴ represents a single bond, or an alkylene group, an alkylene oxide group, a polyalkylene oxide group, or an alkylene-oxy-alkylene group, which may have a substituent. R¹⁵ to R¹⁸ each independently represent an alkyl group, an alkoxy group, or an alkoxyalkyl group, which may have a substituent. m is a natural number of 1 to 10 and n is a natural number of 1 to 3. When n is 1, a plurality of R¹⁵'s may be the same or different from each other. When n is 2 or more, a plurality of R¹⁶'s to R¹⁸'s may be the same or different from each other.

From the viewpoint of ease of availability, R¹³ is preferably a methyl group.

The alkylene group, the alkylene oxide group, the polyalkylene oxide group, and the alkylene-oxy-alkylene group for R¹⁴ are each a group obtained by converting the same ones as the alkyl group, the alkoxy group, and the alkoxyalkyl group described in R⁴ in Formula (2) above into a divalent substituent.

From the viewpoint of surface hydrophilicity and transparency of the molded body and the hydrogel, R¹⁴ is preferably a single bond, an unsubstituted or substituted alkylene oxide group, or an alkylene-oxy-alkylene group; and more preferably a single bond or an unsubstituted or substituted alkylene oxide group.

The alkyl group, the alkoxy group, and the alkoxyalkyl group for R¹⁵ to R¹⁸ are the same as those described for R⁴ in Formula (2) above.

In addition, R¹⁵ to R¹⁸ may be a halogenated alkyl group, and examples of the halogen include fluorine, chlorine, bromine, and iodine.

Among the above, R¹⁵ to R¹⁸ are preferably an unsubstituted or substituted alkyl group; more preferably a methyl group, an ethyl group, an n-propyl group, an i-propyl group, an n-butyl group, a t-butyl group, or an i-butyl group; and still more preferably a methyl group.

m is a natural number of 1 to 10, preferably 1 to 5.

In addition, n is a natural number of 1 to 3, and preferably 2 or 3 from the viewpoint of surface hydrophilicity and transparency of the molded body and the hydrogel.

Among the above, at least one of the following compounds is preferable as the compound (B2).
· A compound in which, in Formula (5), R¹³ is a methyl group, R¹⁴ is a single bond, R¹⁶ to R¹⁸ are methyl groups, m is 3, and n is 3 (TRIS, "SIM6487.6" manufactured by Gelest, Inc.)
· A compound in which, in Formula (5), R¹³ is a methyl group, R¹⁴ is CH₂CH(OH)CH₂O, R¹⁵ to R¹⁸ are methyl groups, m is 3, and n is 2 (SIMMA, "SIM6481.15" manufactured by Gelest, Inc. and "BX-SiGMMA" manufactured by Bimax)

The silicone-based (meth)acrylate (B) may be used alone or in combination of two or more kinds thereof.

Among these, from the viewpoint of surface hydrophilicity, transparency, and flexibility of the molded body and the hydrogel, it is preferable to use the compound (B1) and the compound (B2) in combination.

A contained amount of the silicone-based (meth)acrylate (B) in the present composition is preferably 5% to 50% by mass and more preferably 10% to 40% by mass. In the above-described range, the surface hydrophilicity, transparency, and oxygen permeability of the molded body and the hydrogel are favorable.

### 3. Hydrophilic monomer (C)

The hydrophilic monomer (C) used in the present invention is a component which contributes to hydrophilicity of the silicone hydrogel.

The hydrophilic monomer (C) preferably comprises, in a molecule, one or more groups selected from a hydroxyl group, an amino group, a carboxyl group, an ionic group, an amide structure, and an alkylene oxide structure.

In addition, the hydrophilic monomer (C) may be any of a monomer, a macromonomer, and a prepolymer. However, the hydrophilic monomer (C) is a separate component from the above-described macromonomer (A). The curable composition according to the embodiment of the present invention additionally contains the hydrophilic monomer (C) as a separate component independent of the macromonomer (A).

Examples of the hydrophilic monomer (C) include monomers comprising a hydroxyl group, such as 2-hydroxyethyl (meth)acrylate, 2,3-dihydroxypropyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate; monomers comprising an amino group, such as N,N-dimethylaminoethyl (meth)acrylate; monomers comprising a carboxyl group, such as (meth)acryloxyethylsuccinic acid; monomers comprising an ionic group, such as (3-(meth)acrylamidopropyl)trimethylammonium chloride, (meth)acryloxyethyldimethylbenzylammonium chloride, 3-((meth)acrylamido)propyl dimethylbenzylammonium chloride, (meth)acryloylcholine chloride, and 2-(meth)acryloyloxyethylphosphorylcholine; monomers comprising an amide structure, such as N-hydroxymethyl(meth)acrylamide, N-(2-hydroxyethyl)(meth)acrylamide, (meth)acrylamide, N-vinyl-2-pyrrolidone, N-vinylacetamide, N,N-dimethyl(meth)acrylamide, N,N-diethylacrylamide, N-isopropyl(meth)acrylamide, and morpholyl(meth)acrylamide; and monomers comprising an alkylene oxide structure, such as 2-methoxyethyl (meth)acrylate and polyethylene glycol (meth)acrylate.

The hydrophilic monomer (C) may be used alone or in combination of two or more kinds thereof.

Among the above, it is preferable to be 2-hydroxyethyl (meth)acrylate for the reason of hydrophilicity and ease of availability, and it is preferable to be N-vinyl-2-pyrrolidone and/or N,N-dimethylacrylamide for the reason of imparting flexibility and mechanical strength.

A contained amount of the hydrophilic monomer (C) in the present composition is preferably 20% to 90% by mass and more preferably 30% to 85% by mass. In the above-described range, the surface hydrophilicity and transparency of the molded body and the hydrogel are favorable.

### 4. Surfactant (D)

The surfactant (D) used in the present invention is capable of hydrophilizing a hydrophobic mold used during curing of the silicone hydrogel in a pseudo manner. With the surfactant (D), segregation of the silicone-based (meth)acrylate (B) having hydrophobicity on a surface of the silicone hydrogel is suppressed, whereby an effect of increasing hydrophilicity of the surface of the silicone hydrogel is obtained.

The surface segregation effect of the molded body and the hydrogel of the above-described macromonomer (A) can be enhanced by the surfactant (D). Since the hydrophobic mold is hydrophilized by the surfactant (D) in a pseudo manner, it is possible to reduce a proportion of the macromonomer (A) which is segregated to the surface side and returns to the inside. The synergistic effect of the surfactant (D) and the macromonomer (A) further improves the hydrophilicity of the surface of the silicone hydrogel.

The surfactant (D) may be nonionic or ionic. From the viewpoint of surface hydrophilicity performance and viewpoint that the surfactant (D) is eluted during washing of the silicone hydrogel, an HLB value of the surfactant (D) is preferably 3 to 19. The lower limit of the HLB value is more preferably 6 or more.

As the surfactant (D), a surfactant comprising a polyoxyethylene group, a sugar-based surfactant or a surfactant derived from a biologically derived material is preferable.

Examples of the surfactant comprising a polyoxyethylene group include polyoxyethylene alkyl ethers such as polyoxyethylene hydrogenated castor oil, polyoxyethylene castor oil, polyoxyethylene glycerin fatty acid ester, polyoxyethylene lauryl ether, and polyoxyethylene oleyl ether; a polyoxyethylene-polyoxypropylene copolymer, polyoxyethylene-polysiloxane ether block copolymer, polyoxyethylene-polyoxypropylene ethylene diamine, and polyoxyethylene-polyoxypropylene alkyl ether; polyoxyethylene sorbitan fatty acid esters (polysorbate), such as polyoxyethylene sorbitan monoleate (for example, polysorbate 80); polyoxyethylene sorbitol fatty acid esters; polyoxyethylene alkylphenyl ethers; polyoxyethylene alkylphenyl ether-formaldehyde condensates such as tyloxapol; polyoxyethylene sterol; polyoxyethylene hydrogenated sterol; polyoxyethylene fatty acid esters such as polyethylene glycol monostearate; and polyoxyethylene lanolin alcohol, polyoxyethylene alkylamine, polyoxyethylene alkylamide, and polyoxyethylene alkyl ether phosphate.

The sugar-based surfactant is a nonionic surfactant comprising a sugar as a hydrophilic group.

Examples of the sugar-based surfactant include a sugar fatty acid ester in which a sugar and a fatty acid are ester-bonded, and an alkyl glycoside in which a sugar and a higher alcohol are glycosidically bonded; and among these, a sugar fatty acid ester is preferable.

It is preferable that the fatty acid of the above-described sugar fatty acid ester is a saturated fatty acid.

Examples of the sugar fatty acid ester include sucrose fatty acid ester, sorbitan fatty acid ester, and glucose ester. Among these, sucrose fatty acid ester is preferable.

The number of carbon atoms in the constitutional fatty acid of the sugar fatty acid ester is not particularly limited but is preferably 8 to 22 and more preferably 12 to 18. The fatty acid may be a saturated fatty acid, an unsaturated fatty acid, or a mixture thereof.

Examples of the fatty acid having 8 to 22 carbon atoms include caprylic acid (8), capric acid (10), lauric acid (12), myristic acid (14), pentadecylic acid (15), palmitic acid (16), margarinic acid (17), stearic acid (18), oleic acid (18), and behenic acid (22).

Here, the numerical value described in parentheses is the number of carbon atoms of each fatty acid.

A range of the number of fatty acid ester groups in the sugar fatty acid ester changes depending on the number of hydroxyl groups capable of forming an ester bond in the molecular structure of the sugar, which is a hydrophilic group. For example, the number of sugar units is 1 to 8 in the sucrose fatty acid ester and 2 to 4 in the sorbitan fatty acid ester. The HLB value of the sugar fatty acid ester can be adjusted depending on the number of fatty acid ester groups.

The surfactant derived from a biologically derived material is a surfactant using a biological material such as hyaluronic acid and vitamin as a raw material.

Examples of the surfactant derived from a biologically derived material include a hyaluronic acid derivative in which a hydrophobic group is imparted to a part of a hydrophilic group of a low-molecular-weight hyaluronic acid which is obtained by hydrolyzing high-molecular-weight hyaluronic acid through a glycerin skeleton, such as hydrolyzed hyaluronic acid alkyl (C12-13) glycerol;
a vitamin C derivative such as palmitic acid L-ascorbyl, stearic acid L-ascorbyl, 2,6-dibutyryl-L-ascorbic acid, and 2-O-α-D-glucopyranosyl-L-ascorbic acid; and
a vitamin E derivative such as DL-α-tocopherol acetate, DL-α-tocopheryl sodium phosphate, and D-α-tocopherol succinate.

Among the above, the surfactant (D) is preferably a non-polymerizable surfactant. Since the non-polymerizable surfactant (D) is washed away during washing in the manufacturing of the contact lens, the influence on the formulation of the contact lens can be reduced.

The surfactant (D) may be used alone or in combination of two or more kinds thereof.

In addition, a contained amount of the surfactant is preferably 1% by mass or more and 10% by mass or less. When the contained amount of the surfactant is 1% by mass or more, the hydrophilicity of the molded silicone hydrogel is sufficient. When the contained amount of the surfactant is 10% by mass or less, the silicone hydrogel is not turbid.

### 5. Crosslinking agent (E)

The present composition may further contain a crosslinking agent (E) in order to increase solvent resistance of the hydrogel.

The crosslinking agent (E) acts as a crosslinking agent during the polymerization reaction of the components (A) to (D) described above.

The crosslinking agent (E) preferably comprises two or more polymerizable unsaturated groups.

Examples of the crosslinking agent (E) include a (meth)acrylate-based crosslinking agent such as ethylene glycol di(meth)acrylate, diethylene glycol di(meth)acrylate, triethylene glycol di(meth)acrylate, tetraethylene glycol di(meth)acrylate, allyl methacrylate, trimethylolpropane tri(meth)acrylate, (2-allyloxy)ethyl methacrylate, and 2-(2-vinyloxyethoxy)ethyl (meth)acrylate;
a vinyl ether-based crosslinking agent such as ethylene glycol divinyl ether, diethylene glycol divinyl ether, and triethylene glycol divinyl ether;
an allyl ether-based crosslinking agent such as triethylene glycol diallyl ether and tetraethylene glycol diallyl ether; and
methylenediacrylamide.

A contained amount of the crosslinking agent (E) in the present composition is preferably 0.1% to 10% by mass and more preferably 0.5% to 5% by mass. When the contained amount of the crosslinking agent (E) is within the above-described range, the moldability and the solvent resistance of the molded body and the hydrogel are favorable.

### 6. Polymerization initiator (F)

It is preferable that the present composition further contains a polymerization initiator (F) in order to effectively carry out the polymerization reaction. Examples of the polymerization initiator (F) include a photopolymerization initiator and a thermal polymerization initiator.

Examples of the photopolymerization initiator include benzyl, benzophenone, or derivatives thereof, thioxanthones, benzyl dimethyl ketals, α-hydroxyalkylphenones, α-hydroxyacetophenones, hydroxyketones, aminoalkylphenones, acylphosphine oxides, and oxime ester compounds. Among the above, α-hydroxyalkylphenones are less likely to cause yellowing during curing and are able to obtain a transparent cured product, which is preferable.

Examples of the thermal polymerization initiator include the organic peroxide and azo compound mentioned as the radical polymerization initiator (c) above.

An addition amount of the polymerization initiator (F) is preferably 0.1 to 3 parts by mass, more preferably 0.1 to 2 parts by mass, and still more preferably 0.2 to 1 part by mass when the total of the monomer components in the composition is set to 100 parts by mass. When the addition amount is 0.1 to 3 parts by mass, the polymerization rate is high, and decomposition products and the like, derived from the polymerization initiator (F), are less likely to remain.

### 7. Other components

In addition to the components (A) to (F) described above, the present composition may contain an additive such as a polymerizable ultraviolet absorber and a polymerizable dye (coloring agent) in a range in which the purpose of the present invention is not impaired. The polymerizable ultraviolet absorber and the polymerizable dye are also included in the "monomer component" of the present invention.

A contained proportion of each of the polymerizable ultraviolet absorber and the polymerizable dye is preferably 5% by mass or less and more preferably 0.02% to 3% by mass.

### <Moisture content>

A moisture content of the curable composition is preferably 0% by mass or more and 10% by mass or less. When the moisture content is within the above-described numerical value range, the hydrophilic monomer (C) can be sufficiently close to the hydrophobic mold which has been hydrophilized by the surfactant (D) in a pseudo manner. As a result, the hydrophilicity of the silicone hydrogel surface is likely to be further improved.

### <Molded body and silicone hydrogel>

The molded body and the silicone hydrogel, formed of the present composition, have excellent surface hydrophilicity and transparency and are also exceptional in biocompatibility and low protein attachment.

Therefore, the silicone hydrogel formed of the present composition is particularly useful as an ophthalmic device such as a contact lens, an intraocular lens, and an artificial cornea.

When used as an ophthalmic device, a film thickness of the silicone hydrogel is preferably 0.01 to 4 mm, more preferably 0.01 to 3 mm, still more preferably 0.02 to 2 mm, and particularly preferably 0.03 to 1 mm.

A water droplet contact angle of the silicone hydrogel is preferably 80 degrees or less, more preferably 70 degrees or less, and still more preferably 55 degrees or less. A lower water droplet contact angle is more preferable, and the lower limit thereof may be 0 degrees or more.

The total light transmittance of the silicone hydrogel is preferably 90% or more, more preferably 92% or more, and even more preferably 93% or more. It is preferable that the total light transmittance is high, and the upper limit thereof may be 100% or less.

### <Method for producing curable composition, molded body, and silicone hydrogel>

Methods for producing the curable composition according to the embodiment of the present invention, the molded body, and the silicone hydrogel will be described. The following production methods are merely examples and the invention is not limited at all by these examples.

### (Curable composition)

The present composition can be produced, for example, by putting the respective components in any order or collectively into a stirring (mixing) device and stirring (mixing) the components at a temperature of 10°C to 50°C until the components are uniform.

### (Molded body)

A molded body (cured product) can be obtained by filling a mold with the present composition and performing a polymerization reaction. As the mold, a mold having a hydrophobic surface of polypropylene or the like is preferable.

It is possible to perform the polymerization reaction by irradiation of the composition with active energy rays or by heating the composition.

When the polymerization reaction is performed by irradiation of the composition with active energy rays, examples of the active energy rays include ultraviolet rays and electron beams. Examples of an ultraviolet ray source include a high-pressure mercury lamp. The amount of ultraviolet energy may be, for example, approximately 0.1 to 10 J/cm².

When the polymerization reaction is performed by heating, the temperature and the heating time are not particularly limited, but the temperature is preferably 75°C to 140°C and the heating time is preferably 1 to 12 hours.

The polymerization reaction may be performed in the air, but may also be performed in an inert gas atmosphere such as nitrogen and argon for the purpose of improving the polymerization rate of the monomer. When performing the polymerization in an inert gas atmosphere, a pressure in the polymerization system is preferably 1 kgf/cm² or less.

After the polymerization reaction, it is possible to take out the molded body (cured product) in a dry state by deforming the mold. In addition, the molded body (cured product) may be immersed together with the mold in a solvent (for example, water, methanol, ethanol, 1-propanol, 2-propanol, a mixture thereof, or the like) to swell only the molded body (cured product) and carry out detachment from the mold naturally. It is preferable to take out the molded body (cured product) in a dry state without using the solvent.

After the above-described polymerization reaction, the molded body (cured product) may become a mixture of unreacted monomer components (unreacted products), residues of each component, by-products, and the like, and thus may be washed with a solvent. Examples of the solvent used for the washing include water, methanol, ethanol, 1-propanol, 2-propanol, and a mixture thereof.

### (Silicone hydrogel)

It is possible to obtain the silicone hydrogel by hydrating the molded body (cured product) formed of the present composition into hydrogel form.

The hydration may be carried out by immersing the molded body (cured product) in water or physiological saline for 10 minutes to 5 hours at a temperature of 10°C to 40°C.

As an example, the method for producing the silicone hydrogel includes the following steps.
· Step of preparing the curable composition
· Step of filling a mold with the above-described curable composition and performing a polymerization reaction to obtain a molded body
· Step of hydrating the above-described molded body to obtain a hydrogel Examples

Hereinafter, the embodiments will be described in more detail with reference to Examples. However, the present invention is not limited to the examples described below.

### <Macromonomer (A)>

A macromonomer prepared by the following method was used.

2-methoxyethyl acrylate as a (meth)acrylic acid-based monomer (a-1), ethyl 2-bromomethyl acrylate as a compound (b-1), and 2,2'-azobis(isobutyronitrile) as a radical polymerization initiator (c-1) were dissolved in toluene at a molar ratio of 100:4.0:0.3 (solid content concentration: 40% by mass), heated to 70°C, and polymerized for 6 hours. Thereafter, reprecipitation was carried out using hexane to obtain a macromonomer (A) comprising a structural unit of poly(methoxyethyl acrylate) and a radically polymerizable functional group. A number-average molecular weight (Mn^{GPC}) of the obtained compound (A) by GPC was 2,700, a number-average molecular weight (Mn^{NMR}) thereof by NMR was 2,700, and the remaining monomer was less than 1 mol%.

### <Silicone-based (meth)acrylate (B)>

(B1): silicone macromonomer ("MFR-M15" manufactured by Gelest, Inc.)
(B2): siloxanyl acrylate ("BX-SiGMMA" manufactured by Bimax; (methyl di(trimethylsiloxy)silylpropylglyceryl methacrylate))

### <Hydrophilic monomer (C)>

N,N-dimethylacrylamide was used.

### <Surfactant (D)>

(D-1): sucrose stearate ("RYOTO (registered trademark) Sugar Ester S-570" manufactured by Mitsubishi Chemical Corporation)
(D-2): sucrose stearate ("RYOTO (registered trademark) Sugar Ester S-1170" manufactured by Mitsubishi Chemical Corporation)
(D-3): sucrose laurate ("RYOTO (registered trademark) Sugar Ester L-1695" manufactured by Mitsubishi Chemical Corporation)
(D-4): polyoxyethylene-polyoxypropylene ternary block copolymer ("Pluronic (registered trademark) P-85" manufactured by ADEKA CORPORATION)

### <Crosslinking agent (E)>

Ethylene glycol dimethacrylate was used.

### <Polymerization initiator (F)>

2-Hydroxy-2-methylpropiophenone was used.

### <Preparation of curable composition>

The above-described component (A), component (B), component (C), component (D), component(E), and component (F) were mixed according to the formulation shown in Table 1 and Table 2. Thereafter, the mixture was stirred at room temperature to obtain a curable composition. In the tables, "%" means % by mass, and "part" means part by mass.

### <Preparation of molded body (cured product) and silicone hydrogel>

The above-described composition was poured into a mold made of general-purpose polypropylene, covered with a transparent release PET film, and irradiated multiple times with an UV irradiator (manufactured by Ushio Inc., UVC-501/10S4A) such that the cumulative irradiation amount was 2.7 J/cm², thereby obtaining a molded body (cured product).

The obtained molded body (cured product) was immersed in a sufficient amount of pure water overnight or longer to obtain a silicone hydrogel.

### <Washing of silicone hydrogel>

In order to discharge the surfactant in the silicone hydrogel, the silicone hydrogel was immersed in distilled water at 90°C for 30 minutes in an amount of at least 1,000 times a dry weight of the cured product.

The distilled water was exchanged, and this washing operation was carried out five times.

### <Measurement of number-average molecular weight (Mn)>

A number-average molecular weight (Mn) was determined by two methods by gel permeation chromatography (GPC) and nuclear magnetic resonance (NMR). The measurement conditions are shown below.

### [Measurement of number-average molecular weight (Mn^{GPC}) by GPC]

Apparatus: HLC-8220 (manufactured by TOSOH CORPORATION)
Column: TSK GUARD COLUMN SUPER H-H (4.6 x 35 mm, manufactured by TOSOH CORPORATION) and two TSK-GEL SUPER HM-H (6.0 × 150 mm, manufactured by TOSOH CORPORATION) were connected in series
Eluent: tetrahydrofuran
Measurement temperature: 40°C
Flow rate: 0.6 mL/min

The Mn^{GPC} was calculated using a calibration curve created using polymethyl methacrylate (Mp (peak molecular weight) = 4 of 141,500, 55,600, 11,100, and 1,590) manufactured by Polymer Laboratories.

### [Measurement of number-average molecular weight (Mn^{NMR}) by NMR]

Apparatus: BBF0400 (manufactured by Bruker)
Solvent: CDCl₃
Measurement method: ¹H-NMR

The Mn^{NMR} was calculated from the molar ratio of the terminal double bond group to the repeating units of the monomers, assuming that the introduction rate of the terminal double bond group was 100%, using the integrated value of the peak derived from the terminal double bond group of the generated polymer and the integrated value of the peak derived from the ester moiety of the monomer constituting the generated polymer.

### <Measurement of film thickness>

A film thickness of the hydrogel was measured at three non-specific locations in the surface using a 1/1000 mm dial gauge, and the average thereof was taken as the film thickness.

### <Measurement of water droplet contact angle>

Using a contact angle meter ("DropMaster 500" manufactured by Kyowa Interface Science Co., Ltd.), 2 µg of pure water was dropped onto the silicone hydrogel subjected to the washing procedure described in Examples above, from which moisture on the surface had been sufficiently wiped off, and a contact angle after 10 seconds was measured.

The measurement was performed at room temperature (25°C), and the measurement surface of the silicone hydrogel was a surface which was in contact with a polypropylene mold during curing.

### <Measurement of transparency>

Using a haze meter NDH-7000II (manufactured by NIPPON DENSHOKU INDUSTRIES Co., Ltd.), the total light transmittance of the hydrogel was measured based on JIS K 7136 (2000).

The total light transmittance of a silicone hydrogel sample having a film thickness of 0.8 mm was measured, and the transparency was evaluated as follows.
A: total light transmittance was 93% or more.
B: total light transmittance was less than 93%.

The results are shown in Table 1 and Table 2.

**[Table 1]**

| | | Example 1 | Example 2 | Example 3 | Example 4 | Example 5 |
|---|---|---|---|---|---|---|
| Curable composition | | | | | | |
| Macromonomer (A) [%] | | 10.0 | 10.0 | 10.0 | 10.0 | 10.0 |
| Silicone-based (meth)acrylate [%] | (B1) | 5.2 | 5.2 | 5.2 | 5.2 | 8.7 |
| | (B2) | 7.8 | 7.8 | 7.8 | 7.8 | 17.4 |
| Hydrophilic monomer (C) [%] | | 72.3 | 72.3 | 72.3 | 72.3 | 59.2 |
| Surfactant [%] | (D-1) | 3.0 | - | - | - | 3.0 |
| | (D-2) | - | 3.0 | - | - | - |
| | (D-3) | - | - | 3.0 | - | - |
| | (D-4) | - | - | - | 3.0 | - |
| Crosslinking agent (E) [%] | | 1.7 | 1.7 | 1.7 | 1.7 | 1.7 |
| Polymerization initiator (F) [part] | | 1.0 | 1.0 | 1.0 | 1.0 | 1.0 |
| Water droplet contact angle [degree] | | 42 | 38 | 43 | 47 | 49 |
| Transparency | | A | A | A | A | A |

**[Table 2]**

| | | Comparative Example 1 | Comparative Example 2 | Comparative Example 3 | Comparative Example 4 | Comparative Example 5 | Reference Example 1 | Reference Example 2 |
|---|---|---|---|---|---|---|---|---|
| Curable composition | | | | | | | | |
| Macromonomer (A) [%] | | - | - | - | - | - | 10.0 | 10.0 |
| Silicone-based (meth)acrylate [%] | (B1) | 6.0 | 10.0 | 5.8 | 5.8 | 9.7 | 5.4 | 9.0 |
| | (B2) | 9.0 | 20.0 | 8.7 | 8.7 | 19.4 | 8.1 | 18.0 |
| Hydrophilic monomer (C) [%] | | 83.0 | 68.0 | 80.6 | 80.6 | 66.0 | 74.7 | 61.2 |
| Surfactant [%] | (D-1) | - | - | 3.0 | - | 3.0 | - | - |
| | (D-4) | - | - | - | 3.0 | - | - | - |
| Crosslinking agent (E) [%] | | 2.0 | 2.0 | 1.9 | 1.9 | 1.9 | 1.8 | 1.8 |
| Polymerization initiator (F) [part] | | 1.0 | 1.0 | 1.0 | 1.0 | 1.0 | 1.0 | 1.0 |
| Water droplet contact angle [degree] | | 95 | 92 | 61 | 75 | 70 | 58 | 62 |
| Transparency | | A | A | A | A | A | A | A |

From Examples 1 to 5, it was found that the surface hydrophilicity of the silicone hydrogel was particularly high by using both the macromonomer (A) comprising the structural unit (a1) and the surfactant (D). The hydrogels of Examples 1 to 5 had high total light transmittance and also had favorable transparency.

On the other hand, in Comparative Examples 1 and 2, since the macromonomer (A) and the surfactant (D) were not used at all, the hydrophilization effect was not obtained. In addition, in Comparative Examples 3 to 5, since only the surfactant (D) was used, a sufficient hydrophilization effect was not obtained.

In Reference Examples 1 and 2, since only the macromonomer (A) was used, the hydrophilization effect was inferior to that in Examples 1 to 5.

With the curable composition according to the embodiment of the present invention, it is possible to form a molded body and a silicone hydrogel, which have excellent surface hydrophilicity and transparency even when using a hydrophobic mold of polypropylene or the like.

## Claims

1. A curable composition comprising:
a macromonomer (A) comprising a structural unit (a1) represented by Formula (1);
a silicone-based (meth)acrylate (B);
a hydrophilic monomer (C); and
a surfactant (D), 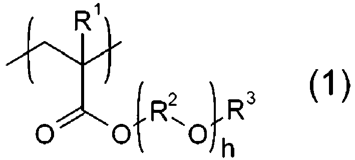
in Formula (1), R¹ represents a hydrogen atom or a methyl group, R² represents an alkylene group having 1 to 4 carbon atoms, R³ represents a hydrocarbon group having 1 to 6 carbon atoms, and h is a natural number of 1 to 20.

2. The curable composition according to Claim 1,
wherein a contained amount of the macromonomer (A) is 1% to 50% by mass.

3. The curable composition according to Claim 1,
wherein a proportion of the structural unit (a1) in all structural units of the macromonomer (A) is 40% by mass or more.

4. The curable composition according to Claim 1,
wherein a proportion of the structural unit (a1) in all structural units of the macromonomer (A) is 70% by mass or more.

5. The curable composition according to Claim 1,
wherein a number-average molecular weight of the macromonomer (A) is 500 to 100,000.

6. The curable composition according to Claim 1,
wherein a number-average molecular weight of the macromonomer (A) is 1,000 to 5,000.

7. The curable composition according to Claim 1,
wherein the structural unit (a1) is derived from a monomer (a' 1), and
the monomer (a'1) is at least one selected from the group consisting of methoxymethyl acrylate, methoxyethyl acrylate, methoxypropyl acrylate, methoxybutyl acrylate, methoxypolyethylene glycol acrylate, methoxymethyl methacrylate, methoxyethyl methacrylate, methoxypropyl methacrylate, methoxybutyl methacrylate, and methoxypolyethylene glycol methacrylate.

8. The curable composition according to Claim 1,
wherein the macromonomer (A) comprises a terminal structure (a2) represented by Formula (2), 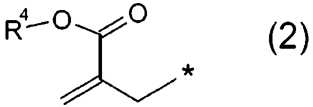
in Formula (2), R⁴ represents a hydrogen atom, or an alkyl group, an alkoxy group, an alkoxyalkyl group, an alicyclic group, an aryl group, a heteroaryl group, or a non-aromatic heterocyclic group, each of which may have a substituent, and * represents a bonding site.

9. The curable composition according to Claim 1,
wherein the silicone-based (meth)acrylate (B) is a monomer comprising a siloxanyl group in a molecule.

10. The curable composition according to Claim 1,
wherein the hydrophilic monomer (C) is a monomer comprising, in a molecule, one or more groups selected from a hydroxyl group, an amino group, a carboxyl group, an ionic group, an amide structure, and an alkylene oxide structure.

11. The curable composition according to Claim 1,
wherein the surfactant (D) has an HLB value of 3 to 19.

12. The curable composition according to Claim 1,
wherein the surfactant (D) is a surfactant comprising a polyoxyethylene group or a sugar-based surfactant.

13. The curable composition according to Claim 1,
wherein the surfactant (D) is a non-polymerizable surfactant.

14. The curable composition according to Claim 1,
wherein a moisture content of the curable composition is 0% by mass or more and 10% by mass or less.

15. A molded body comprising:
the curable composition according to any one of Claims 1 to 14.

16. A silicone hydrogel comprising:
the curable composition according to any one of Claims 1 to 14.

17. A method for producing a silicone hydrogel, the method comprising:
a step of preparing the curable composition according to any one of Claims 1 to 14;
a step of filling a mold with the curable composition and performing a polymerization reaction to obtain a molded body; and
a step of hydrating the molded body to obtain a hydrogel.

18. The method for producing a silicone hydrogel according to Claim 17,
wherein the mold has a hydrophobic surface.
